# EUROPEAN PATENT APPLICATION

(11) **EP 1 892 517 A2**
(43) Date of publication of application: **27.02.2008**
(21) Application number: 06757947.4
(22) Date of filing: 05.05.2006
(51) Int. Cl.: G01N 21/00, G01N 21/64

(54) **FLUORESCENT NANOSCOPY METHOD**

(30) Priority: 18.05.2005 RU 2005115052
(71) Applicant: Klimov, Andrey Alexeevich, Moskovskaya obl.,142290 (RU)
(72) Inventor: KLIMOV, Dmitry Andreevich, Moskovskaya obl., 142290 (RU); KLIMOV, Evgeniy Andreevich, Moskovskaya obl., 142290 (RU); KLIMOVA, Tatiana Vitalyevna, Moskovskaya obl., 142290 (RU)
(74) Representative: Jeck, Anton
(86) International application number: PCT/RU2006/000231
(87) International publication number: WO 2006/123967

(57) **Abstract**

The invention relates to analysis of object dyed with fluorescent colouring agents carried out with the aid of a fluorescent microscope. The microscope comprises an optical system for visualising and projecting a sample image to a video camera, a computer for recording and processing images, a sample holder arranged in front of an object lens and a fluorescent radiation exciting source. The separately fluorescent visible molecules and nanoparticles are periodically formed in different object part. A laser produces the oscillation thereof which is sufficient for recording the nonoverlapping images of said molecules and nanoparticles and for decolouring already recorded fluorescent molecules. The pictures of recorded individual molecule and nanoparticle images are processed by a computer for searching the co-ordinates of the stain centres and building the object image according to the calculated co-ordinates of the stain centres corresponding to the co-ordinates of the individual fluorescent molecules and nanoparticles. Said invention makes it possible to obtain a two- and three-dimensional image with a resoling power better than 20 nm and to record a colour image by dyeing proteins, nucleic acids and lipids with different colouring agents.

## Description

This invention presents equipment for scientific research, and lens fluorescence microscopes in particular. Such microscopes are used for obtaining images of glass fluorescent objects. More specifically, this invention is a computerized fluorescent-microscopically method of reconstructing images of objects with resolution up to several nanometers (nm).

There are known optical microscopes which can create zoomed images of an object with object lenses which can show two spots on an object separately only when the distance between them is more than so called diffraction limit. This limit can be calculated using following formula: r=0.61λ/A (1), where λ - light wavelength for light collected by object lens with aperture A=n*sin(ϕ), n - refraction index of substance which surrounds object spots, ϕ - angle between object lens axis and extreme rays which fall into object lens and are detected in detector. Nowadays different types of devices are used for fluorescent microscopy by means of object lenses. Powerful arc-lamps, incandescent lamps, laser or sun light can be light sources for the microscope. Fluorescence starts in all dye molecules present in lighted area. The area is lighted through the object lens using a light-dividing dichroic mirror. Such mirror lets exiting light to fall on the object and reflects fluorescent light to detector. The second type of lighting occurs by sending laser light from the side. This lights the object all the way down or through object glass at total internal reflection angle. In this case light reaches a depth of only 0.3 of light wavelength from border between glass and object which has refraction index lower than glass. Object fluorescent light is collected by object lens. It sends an object image for visual observation and registration by means of photomultiplier, photographic tape or digital video-camera. The main disadvantage of all existing lens microscopes is that they have limit of distinguishing two neighboring spots. This limit can be calculated according to formula (1).

Recently microscopy using super lenses made from silver film has been developed. Film thickness is less than 50 nm; it can assure resolution of two spots on distance approximately 50 nm from each other. (N. Fang and X. Zhang, Imaging properties of a metamaterial superlens, 2003, App phys Let v. 82, 2, 161-163; Nicholas Fang, Zhaowei Liu, Ta-Jen Yen, and Xiang Zhang Regenerating evanescent waves from a silver superlens, 2003, OPTICS EXPRESS, Vol. 11, No. 7, 682-687). Use of such microscopes on biological objects is however unclear. The present microscope has a resolution several times lower than resolution of this device.

There are devices with a maximum resolution better than 1 nm, for example, electronic, tunnel, and atomic-force microscopes. It should be noted that they have not only real advantages, but also have serious disadvantages, such as: complexity and expensiveness of their design and work with objects; lack of opportunity to receive color image for distinguishing molecules of different types; objects usually should be dried and treated with substances which change the mutual layout of different parts of the object. Atomic and tunnel microscopes also do not allow to detect structures inside the object; only one spot can be detected at a time and scanning speed does not overcome 1 square micron per min; end of the needle easily becomes dirty and is not able to reach object surface after this.

There is also a device, where object fluorescence is exited by laser through hole on the butt of a glass fiber. The fiber is moved by drives in three directions to position end of the fiber near light-reflecting, light-diffusing or covered with fluorescent molecules surface. This type of microscope does not use lenses and permits obtaining images with resolution ten times better than the resolution of common optical microscopes. These results can be reached only when the hole on the butt end of glass fiber is much less in diameter than light wavelength. The light comes onto object with a depth much shorter than light wavelength. Practically all light returns back into the glass fiber, except that part which was captured by objects from outside of the hole. Fluorescence, light-diffusion, and reflected light strength, captured in the object near the hole, is measured by means of a photomultiplier. The image of object surface is reconstructed by means of computer, which gathers information about the strength of measured light and data on end of glass fiber coordinates. The main disadvantages of this system are: need to use expensive high-precision and fast-acting mechanic units, responsible for moving of glass fiber against object; producing of glass fiber with end hole less than 50 nm in diameter turned to be very expensive, complex and difficult for duplicating; the hole is easily dirtied and is not able to reach object surface after this; only insignificant part of light can leave the fiber through the hole with diameter less than light wavelength; if light is stronger, than glass fiber end this can become hot and will be destroyed; it is impossible to detect fluorescence in the areas of the object which are not accessible by glass fiber; only one spot can be detected at a time, surface scanning speed does not exceed 1 square micron per minute.

One more new microscope type is described. It scans an object surface with several light beams simultaneously. National Institute of Standards and Technology (NIST), issued a grant for 5 years research work on creation of this microscope (http://www.betterhumans.com/News/news.aspx?articielD=2005-02-11-4, "Optical Microscopes Enter the Nano Age. Hybrid system being developed to image and measure features smaller than the wavelength of visible light".) It is indicated in the article, that a 40 nm nanoparticle can be distinguished using this method. There are no indications of authors being successful in distinguishing two separate particles located on distance less than 40 nm from each other. It is not clear from presented drawings and explanations how this method will allow distinguishing two particles on distance less than r< 0.61A/A between them. In our opinion, the suggested device will not reach resolution of object details, located on the distance much shorter than light wavelength.

Method of using common fluorescent microscope (Erwen, A Sharonov, JH Ferris, RM Hochstrasser: Direct visualization of nanopatterns by single-molecule imaging. App Phys Let 2005, 86: 043102) can thought of as the most close by analogues of this invention. The main idea of this method is that sample - light film of polymer with free open spherical cells 1 micron in diameter - is dyed with very low concentration of fluorescent peptide. Such concentration allows to observe separate peptide molecules which can migrate in Brownian motion inside the hollow of spheres. The sample is lighted through the object glass by means of a laser beam. Lightning angle is equal to total internal reflection angle. Laser beam excites fluorescence in 150-200 micron layer of the sample near the glass. Location of several tens molecules of fluorescing peptide, each of which was dyed by simultaneously fluorescing molecules, was detected by high-sensitivity video camera (Roper Scientific, Cascade 512F with electrons multiplier built in CCD) in 500 sequential frames. Each frame was recorded to computer memory. Each image contained many spots of approximately 0.5 microns in diameter multiplied on system zoom value. All these images were added to each other. Result image had resolution not exceeding resolution of common fluorescent microscope. Main disadvantages of this system are: there is no information in the article about opportunity to calculate location of detected spots' centers and to generate image on basis of these spots with resolution higher than diffraction limit (see formula 1); approaches to selective dyeing of object structures are not described in the article; there is no description of solving following problem: after dyeing substances will loose color in process of detecting non fluorescing peptide molecules staying in observation area. This will make solution more thick and will not allow replacing such molecules with new fluorescing ones. This does not allow obtaining larger quantity of frames than 500. These large quantities are needed to receive image with resolution higher than allowed by diffraction limit (see formula 1).

Researching of biological objects, for example, muscles, is characterized by the fact that there are many different types of molecules which are located much closer than the resolution of common optical microscopes which create zoomed image of the object by means of object lens in plane of recorder - eye, photo- or video camera. The diffraction limit of microscope resolution (formula 1) limits the resolution in microscopes with simultaneous observing of all spots in observation area and in microscopes with sequential observing of all spots of an object by means of focused on one spot light ray (confocal and other types of scanning microscopes). That is why it would be great if all the advantages of optical microscopes and used methods of selective dyeing of different types of molecules in vision area would be united with such improvement of resolution, which would allow separately observing molecules located less than 10-20 nm from each other. This invention's task is to work out methods of dyeing objects, preparing objects for research, computer analysis of results. This computer analysis will allow receiving object image with resolution higher than 20 nm. This will turn fluorescent microscope into "nanoscope". This task is solved by making multiple pictures of low dyed objects, (all fluorescing molecules in the objects are seen separately as spots with diameter 2r=1.22λ/A, having different location on tens of thousands of sequential frames). Further, all these frames are used to calculate locations of centers of all detected spots (these locations correspond with actual coordinates of fluorescing molecules). Then 3-D reconstruction of all dye molecules' locations is performed. Resolution is comparable with fluorescing molecules' size. Different structures of the object can be dyed in different colors. Fluorescent nanoscope can be based on standard modules, used in fluorescent microscopy. The invention comprises various modules: an optical system for visual observation and transmitting of object image to digital video camera. Video camera should be able to detect and digitize images of separate fluorescing molecules and nanoparticles with low background noise level. Second module of the system is computer for recording and analyzing images. Third component is a sample holder, located opposite to objective lens. Fourth component is set of changeable suppressing color filters for picking up light of sample fluorescence. Nanoscope should be equipped with two light sources installed aside from sample holder. Installation angle should assure lighting of all cutting-depth of a sample or in layer less than 150 nm near the glass. Fluorescent molecules in this layer can absorb energy of light waves, flowing through border when lighted on total internal reflection angle. Observation object should be preliminary dyed in a solution with saturating concentration of caged dye which starts fluorescing only when UV light pulse separates blocking fluorescence groups from dye molecules. Superfluous dye should be carefully washed out. It is very hard to assure stability of molecular structures for a long time far from covering glass and prism glass holding the object. This is true for objects observed exactly in fresh flushing solution. That is why best resolution of nanoscope can be received only for those layers of the object which are located on the distance not more than 150 nm from prism glass. This is the depth which light reaches when falling on the boundary surface at a total internal reflection angle. In case of observing dead preserved object it is usually possible to observe the object during many hours. Different structures, located near base glass are almost absolute immovable. They keep their location because of multiple stable mutual connections and connections with base glass. They are immovable in spite of the fact that near 80% of volume is occupied with aqueous solutions of different salts. Gaps on glass edges should be hermetically sealed (for example, with paraffin) to avoid drying of solution.

3-D nanoscopy needs total immobility of the object and its parts against objective lens. That is why the object should be treated with drying solutions and placed into polymer non-fluorescent substance (for example, epoxy) after dyeing with caged dye and flushed. Cuts of the object of several microns thickness can be used for 3-D reconstruction of the object with 10-20 nm resolution in all tree directions. Such object contained in solid substance can be lighted as it is done in common fluorescent microscopy. Only improvement is that additional flash-lamp should be used in order to turn several hundred no - fluorescing molecules into fluorescing in each frame. For both - object in liquid and object in polymer film - UV flash-lamp with λ<360 nm periodically lights the object, dyed with non fluorescing dye, and each time turns several hundred (and even thousand) of non-fluorescing molecules into fluorescing ones by photolysis of special chemical groups blocking fluorescence. The laser constantly lights the object and excites fluorescence of newly formed fluorescent molecules with such strength, that each of them will send several tens of thousands light quanta in part of a second. Molecule will loose color after its fluorescence registration on digitized frame with low background noise level. Cycling of fluorescent molecules generation, their exiting, registration and loosing color can be repeated tens of thousands of times. Each time new fluorescence molecules will be generated, detected and will loose color. Not converted non-fluorescent molecules will not loose color because they do not absorb laser light. Tens of thousands of frames can be detected using this method. Hundreds and even thousands of fluorescing molecules can be detected on each frame. It will allow calculating locations of all tens of millions of fluorescing molecules covering surfaces of all structures, located in field of vision. Dyes with different active groups can be used for dyeing structures of different nature in different colors. Active groups can link to either proteins, either nucleic acids, either fats, etc. (Suggested method name - color nanoscopy).

The second modification of nanoscopy method is based on the fact that Brownian motion of very bright fluorescing and resistant to loosing color nanoparticles is possible inside most part of volume of biological sample with penetrated membranes, filled with salt solution. Nanoparticles are presented by ficobiliprotein molecules or fluorescing micro spheres 10-40 nm in diameter. This motion can be regulated by electrophoresis with current, provided by several pairs of interlacing electrodes. Current directs particles' motion in different directions. So they scan all accessible volume. If several hundreds of same (or changing with those which are out of lighted area) fluorescing particles are moving on the distance more than 1-2 microns from each other are detected in each frame, than it is possible to calculate their location with several nm accuracy (as coordinates of centers of corresponding spots). Coordinates from all frames can be used for finding out all locations where particles can appear over a long time period. It indicates all volume that is occupied with liquid. Part of the volume, where particles were not able to be present, can be considered to be occupied with dense structures of different origin - peptides, chromosomes, parts of not damaged membranes, etc. Possible fluctuations of particle location can enlarge spot size a little, but spot center location can be considered as averaged coordinate of the particle in the object. It should be noted, that particles with positive charge, negative charge, and neutral particles can visit different areas of the object. It happens because they interact with local charges of bio-structures, that is why this method can be useful for studying of surface charges of object structures. (suggested name of the method - monochrome nanoscopy).

Both suggested methods can assure nanoscope resolution up to several nm, depending not from resolving power (formula 1), but from intrinsic mobility of structures in observed part of the object during long time period. Second factor is proportion between noise and signal in video data. Both factors can be adjusted by various modifications of presented methods. For example, some bright shining key fluorescing particles can be introduced into object. Then coordinates of changing particles can be calculated taking into account moving in vision area of key particles rigidly connected with the object. Such approach allows reaching 2-D distinguishing of parts of the object, located on the distance of several nm,

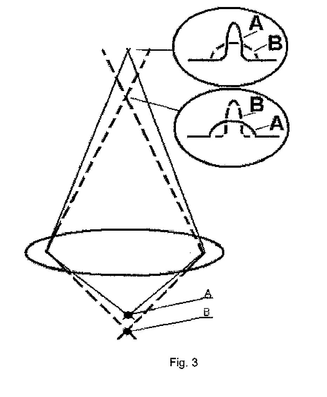

It should be noted that some parameters of fluorescing particles' images (diameter of spots and light intensity distribution along section of each spot) can change as particle distances from focal plane of microscope object lens. That is why it is suggested to perform calculation of these parameters also in order to calculate third coordinate of the shining particle. It is suggested to project object's image on two video-cameras. This will improve precision of the third coordinate definition. The light rays are divided in two rays after the object lens. Video-cameras are located so that two neighboring focal planes of the object would be projected on them through one object lens. Light intensity distribution for each particle will be different when detected by different cameras. It can be scaled depending from third coordinate and used to create 3-D images of the objects. Figure 3 shows illustration of 3-D nanoscopy foundations. Diameter and intensity of spots from fluorescing particles which are projected on CCD, depends from distance between particle and object lens. Two cameras, focused on different focal planes, show one particle with different diameters and different intensity distribution along diameters. The diagrams in the upper right corner of the figure illustrate differences between diameters and distribution of intensity along diameters depending from cameras and fluorescing particles location.

Besides this, nanoscope in some cases can be helpful in finding centers of spots which are created by fluorescing particles in two-three different wavelengths and same exciting status. It can be done by means of separating light dichroic mirrors. Such mirrors pass light with one wavelength to one camera and reflect light with other wavelength to other camera. According to this, presented invention allows to reconstruct simultaneously with nano resolution location of several different types of object molecules. These molecules will be dyed with dyes having different emitting wavelengths. This will allow enlarged quantities of simultaneously seen and detected separately spots from fluorescing particles. This can be achieved due to the fact that they can be seen separately in waves of different lengths even if corresponding spots of different colors are seen interfering.

It can turn to be very useful if described methods of nanoscope work are combined with additional changing of caged non fluorescing molecules into fluorescing ones. This can be done by means of chemical reactions or different physical influences which will separate groups which block fluorescence. Examples of such reactions are ATP reactions, esterase influence, peroxidation, radioactive transformation, etc. Fluorescing molecules, created as result of such modifications, can be exited by means of laser and detected with video-cameras, used for calculating coordinates of object structures' surface according to above described methods. Their coordinates can be calculated as centers of appropriate spots on video frames. Then their images can be "overlapped" on earlier reconstructed image of the object. They will show location of reaction active groups of the object. Resolution of such image will be better than 20 nm.

It is obvious for a specialist, that invention, described in attached claims, can be modified with different methods, not stepping aside from basic ideas of the invention.

Device operation as a nanoscope can be altered by using fluorescence microscope in the normal regime. This regime gives opportunity of direct visual observation of the object in situ with common resolution (formula 1). It also gives opportunity to detect image with digital video-camera of very high sensitivity and transmit it to computer memory. Then these frames will be analyzed to measure geometric parameters and light intensity in different areas of the frame. This can be used, for example, during bioluminescent and chemoluminescent research.

The presented drawings show how fluorescent microscope can be modified to implement nanoscopy method according to this invention.

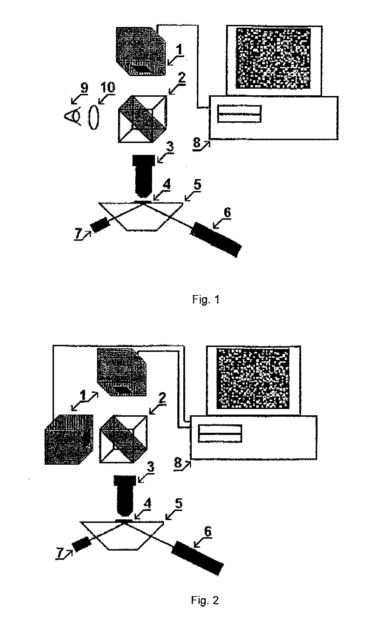

The fluorescent microscope-nanoscope, as it is shown on figures 1 and 2, is equipped with: one (figure 1) and two (figure 2) monochrome video-cameras (1) with digital output and suppressing color-filters, located opposite to their sensors (CCD). These color-filters pass only fluorescent light to cameras. Microscope is also equipped with light dividing removable prism (2); object lens (3) with zoom up to 100x and aperture up to A=1.4. Object (4) is pressed down to glass object holder (5) which has beveled in the form of truncated prism edges. Device is also equipped with laser (6) with lens system for exciting fluorescence through prism planes; with pulse UV-source with lens system for photolysis of blocking fluorescence groups, present on dye molecules. Another important part is computer (8) with software for recording and working with digitized images. This software is also used for control of power source, providing energy for UV pulses and electrophoresis device. Eye lens (10) (figure 1) is used for visual observation (9), Unit should be placed into soundproof cabinet, placed on anti-vibration table. Device, providing power to electrophoresis electrodes which direct movement of mobile fluorescing nanoparticles inside the object, filled with salt solution, will be described separately.

Receiving of image with nanoscope which uses high sensitive cameras Cascade 1K, produced by Photometrics, or cameras SISI_t285EM, produced by Theta-system, will be taken as an example. Cameras are equipped with CCD TC285SPD, produced by Texas Instruments, with electrons multiplier which is included in CCD crystal. It has quantum effectiveness up to 63%, 1004 active horizontal square pixels with side of 8 microns in 1002 lines on photosensitive square of approximately 8x8 mm. If object image is projected directly to CCD of video-camera by means of 100x object lens, than square on the object, lighted with laser and its lens system, should be a little bit larger than 80x80 microns. Each CCD pixel corresponds with object square of 80x80 nm. Each shining particle or molecule is seen on the object as spot with diameter of 2r=1.22λ/A, which is near 560 nm. It will be projected to CCD square with diameter near 7 pixels. The average distance between chaotically spread particles in each frame should be more than 2000 nm. In this case practically all of them will be seen separately. In this case at least 40 x 40 = 1600 spots can be simultaneously projected to CCD in each frame in such a manner, that they will be observed separately. Different methods can be used in order to reach such concentration of simultaneously fluorescing particles. First of all, it is possible to dye object with brightly fluorescing particles in low concentration. This will allow them to move in observation area in Brownian motion and they can be additionally moved with electrophoresis current. Current will be provided with several pairs of electrodes in such manner, that it will direct particles to move in different directions. Secondly, the object can be dyed with special dyes like 5-carboxyfluorescein-bis-(5- carboxymetoxy-2-nitrobenzil) ester, beta-alanin-carboxylamid, suxynimidil ester (CMNB-caged carboxyfluorescein, SE), fabricated by Molecular Probes, USA. After lighting with UV flash with wavelength of 310-365 nm (with previously adjusted exposition) approximately 1000-1600 molecules of this non fluorescing dye in observation area will loose special groups which block fluorescence. Such molecules are able to produce several thousands quanta of green light when been lighted with blue light. After this they will loose color. When objective lens aperture is A=1.1 - 1.3, more than 10% of light from each fluorescing particle will be transmitted to video-camera and participate in forming of the spot, covering near 40 pixels of CDD. Light intensity in the center of the spot is up to 100 quanta. This is enough to receive video signal with quite satisfactory proportion of signal and noise (when using above mentioned cameras). This proportion will allow calculating coordinates of spot center with resolution higher than 20 nm. This dye does not absorb laser light and loose color until groups which block fluorescence are linked to it. That allows repeating the following process tens of thousands of times: in the beginning CCD detects the image of the object with residue fluorescence. Then the image is digitized in video-camera and is transmitted to computer Then UV flash creates 1000-1600 fluorescing molecules in vision area, laser excites fluorescence in these molecules. CCD detects images of fluorescing molecules and particles, overlapped on residual fluorescence. Image is digitized in video-camera and is transmitted to computer where previous frame with residue fluorescence is subtracted from it. To received subtracted frame is stored in computer memory for further analysis with the purpose of calculating coordinates of spot center, its averaged diameter, and intensity. Then the object is for some time lighted with laser without detecting its image. It is done to maximize discoloring of already detected molecules. Then whole cycle is repeated. New fluorescing molecules will be created, detected and discolored in each cycle until coordinates of all dye molecules will be detected. Molecular Probes produces not only mentioned dye. Company also produces such dyes on request. It also produces sets of reagents for individual creating of such dyes - "caging kit" (D-2516)

Cameras, indicated in the example, allow to record images of separate fluorescing molecules with frequency of 10 frames per second. Images are recorded with satisfactory proportion of signal and noise. It is possible to detect, for example, 40000 frames during several hours. Each frame will contain up to 1600 images of molecules. If so, total quantity of detected fluorescing molecules' coordinates can reach 64 million, average distance between observed separately molecules can be only 10 nm. This is tens times better than in any other lens microscopes. Frames with molecules' images should be saved without compressing or compressed without loosing quality. This should be done for more exact calculating of molecules' coordinates. Total volume of information on all not compressed frames in one experiment can reach tens of gigabytes. This will not create a problem taking into account modern hard disk drives volume. Literature sources provide information on various algorithms of calculating spots' centers. We have created computer software to perform such calculations and reconstruction of full image based on table of calculated coordinates of spots' centers.

## Claims

1. Method of nanoscopy of dyed objects; these objects being placed in solution or as a slice of a preserved sample placed in polymer, the method uses a fluorescent microscope equipped with digital video-cameras with suppressing color filters for picking up fluorescence light of the object, such cameras are able to detect (with low noise level) images of separate fluorescing molecules which are excited by a laser, the microscope is also equipped with computer for recording images, received from the video-camera;
**characterized in that** periodically one to two thousands of non-fluorescing dye molecules are turned into fluorescing ones by means of UV flash, these molecules covering object structures, the molecules are turned into fluorescing ones because chemical groups which block fluorescence are separated from them, the images of created fluorescing molecules are detected on video-camera frames as separate spots, the molecules loose color in the process of detection and frames with residual fluorescence are subtracted from frames which contain mixture of fluorescing particles and residual fluorescence, the subtracted frames are saved to computer memory in order to find centers of spots, which represent coordinates of dye molecules, this process is repeated a number of times in order to calculate coordinates of all dye molecules in lighted area of the object and to a reconstruct 2-D or 3-D image of the object with resolution better than 20-50 nm.

2. Nanoscopy method according to claim 1, **characterized in that**, that instead of fluorescing molecules, a regularly created and discolored object is dyed with observed separately fluorescing nanoparticles, each of these nanoparticles contains a number of fluorescing light resistant molecules, these molecules can move between structures of the object because of Brownian forces and when driven by 2-D electrophoresis a laser constantly excites fluorescence of these particles, the video-camera and computer detects tens of thousands of frames with one-two thousands of observed separately spots in each frame, these spots reflect particles' location, a liquid part of the area is detected based on calculated spots' centers coordinates on all frames and particles can move in these areas.

3. Nanoscopy method according to claim 1, **characterized in that**, that a second video-camera is used, the second camera being the same as the first camera, but it is located so that its sensor detects images of the object plane which differs in depth from plane detected by the first camera, this difference can be from 50 to 2000 nm, the difference in distribution of light intensity, received by both cameras, is used for calculating a third coordinate of dye molecule location in the object, which is used for creating 3-D image of the object, the object in liquid sample is lighted through object glass under the angle, equal to angle of total internal reflection, the object in solid cut with thickness from parts of micrometers to several micrometers can be lighted through an objective lens on all depth of solid cut, or through object glass under the total internal reflection angle.

4. Nanoscopy method according to claim 1, **characterized in that**, that different structures of the object are simultaneously dyed with different dyes, fluorescing on different wavelengths, a set of dichroic mirrors and color-filters is used for selective projecting of different structures' images to two or more video-cameras which multiplies quantity of simultaneously detected molecules.

5. Nanoscopy method according to claim 1 **characterized in that**, that in addition to image, formed according methods from claims 1 to 4, different caged molecules are periodically introduced into the object, such molecules can turn form non fluorescing into fluorescing as the result of different chemical reactions or because of different physical exposures, these factors separate chemical groups which block fluorescence, groups are separated with such speed that all generated fluorescing molecules are detected on video-camera frames as separate spots. Molecules loose color during registration, frames with residual fluorescence are subtracted from frames containing mixture of images of residual fluorescence and fluorescing molecules images, subtractive frames are saved in computer memory for further finding centers of spots, these centers represent coordinates of dye molecules, this cycle is repeated a number of times by means of creating new fluorescing molecules in lighted area in order to calculate coordinates of all dye molecules in the object and to perform computer reconstruction of location of such "special" molecules on earlier received 2-D or 3-D image of the object
